# EUROPEAN PATENT SPECIFICATION

(11) **EP 2 607 868 B1**
(45) Date of publication and mention of the grant of the patent: **20.01.2016**
(21) Application number: 11817878.9
(22) Date of filing: 23.05.2011
(51) Int. Cl.: G01G 19/62, G01G 13/00, G01G 23/365, G01G 23/37

(54) **ELECTRONIC SCALE, ELECTRONIC SCALE SYSTEM, AND WEIGHING OPERATION METHOD FOR OBJECT TO BE WEIGHED**
ELEKTRONISCHE WAAGE, ELEKTRONISCHES WAAGENSYSTEM UND WAAGENBETRIEBSVERFAHREN FÜR ZU WIEGENDE OBJEKTE
BALANCE ÉLECTRONIQUE, SYSTÈME À BALANCE ÉLECTRONIQUE ET PROCÉDÉ D'OPÉRATION DE PESAGE POUR OBJET À PESER

(30) Priority: 19.08.2010 JP 2010183706
(43) Date of publication of application: 26.06.2013
(73) Proprietor: Kawanishi, Shozo, Nishinomiya-shi Hyogo 6620088 (JP)
(72) Inventor: Kawanishi, Shozo, Nishinomiya-shi Hyogo 6620088 (JP)
(74) Representative: Jacob, Reuben Ellis
(86) International application number: PCT/JP2011/002853
(87) International publication number: WO 2012/023227

(56) References cited:
- JP-A- 1 094 224
- JP-A- 1 094 224
- JP-A- H08 128 881
- JP-A- 2010 122 013
- JP-A- 2010 122 013

## Description

The present invention relates to an electronic weigher, an electronic weigher system and a weighing work method of objects. Particularly, the present invention relates to an electronic weigher, an electric weigher system, and a weighing work method of objects which are used to weigh and manage a fixed-weight product.

### Background Art

Conventionally, to weigh and manage a product (hereinafter referred to as "fixed-weight product") in which objects (e.g., food) made to have a weight within a proper weight range is filled into a bag, a container, or the like, an electronic weigher which displays the weight of the objects in a digital format is used.

The electronic weigher is one example of weighing apparatuses which electrically weigh objects by using, for example, load cells of an electric resistance wire type. The electronic weigher is configured in such a manner that a change in an electric resistance value which occurs when metal attached with a strain gauge (or electric resistance wire strain meter) strains by applying a load is measured and thereby the weight of the objects is displayed on a display device in a digital format.

It is important to quickly fill the objects with a proper amount into a bag, a container, or the like, in weighing and managing of the fixed-weight product, to improve a productivity of the fixed-weight product. That is, an operator must read the weight of the objects displayed on the display device in the electronic weigher quickly and accurately during weighing, and determine whether or not the read weight falls within a proper weight range. Also, if the weight of the objects is deficient or excess, the operator must increase or decrease the weight to make compensate for the deficient or excess weight quickly and accurately so that the weight of the objects falls into the proper weight range quickly and accurately.

However, the display device of the conventional electronic weigher merely displays the weight of the objects. Therefore, an operator who is inexperienced in weighing work of the objects cannot attain the proper amount of the objects quickly, when the weight of the objects is deficient or excess. For example, in many occasions, such an operator repeats the weighing work of the objects plural times in a trial-and-error method so that the weight of the objects is adjusted to fall into the proper weight range.

JP 08-128881 describes to a device for weighing vegetables for packaging within a specific weight range. The device provide a coloured indication of whether the amount of vegetable grabbed by the operator for adding to the bag is insufficient or exceed the required amount. Thus, the operator needs to assess himself the amount to be added or removed by trial and error.

JP 01-094224 describes to a scale for weighing a required amount of articles. The average weight of a single article is calculated by weighing the total weight of the articles and subsequently dividing the total weight by the number of articles so that the operator adds or removes the relevant number of articles to reach the required final weight. Thus, the operator must assess himself the correct amount of article(s) to be added or removed.

JP2010-12213 describes an electronic scale displaying on one hand the weight of an object and on the other hand the weigh which must be added or removed to reach the required weight of the object. Thus, the information is provided in units weight such as grams and the operator must determine empirically the volume of the object corresponding to the deficient or excess weight.

Under the circumstances, an electronic weigher is proposed, in which a specific numeric value indicating a degree of deficient or excess amount of the objects (deficient or excess weight of the objects) is presented to the operator to enable the operator to recognize the deficient or excess amount of the objects easily (see Patent Literature 1). This electronic weigher allows the operator inexperienced in the weighing work of the objects to improve a work speed in weighing and managing of the fixed-weight product.

### Citation Lists

### Patent Literature

Patent Literature 1: Japanese Laid-Open Patent Application Publication No. 2010-122013

### Summary of the Invention

### Technical Problem

It is true that the operator can know a degree of deficient or excess amount of the objects by the deficient or excess weight of the objects by using the electronic weigher disclosed in Patent Literature 1. Therefore, this is helpful in weighing and managing of the fixed-weight product. However, even though the information indicating the deficient or excess amount of the objects is presented to the operator as the deficient or excess weight of the objects, a possibility of the trial-and-error method of weighing work of the objects cannot be eliminated completely. Thus, there is a room for improvement. For example, the operator must determine a volume of the objects empirically based on the deficient or excess weight of the objects.

The present inventors paid attention to the weighing work of the objects in which the objects with a fixed amount are grabbed with the operator's hand or are scooped by using a weighing tool or the like (hereinafter simply referred to as "routine work") and found out that the fixed-weight product can be weighed and managed more efficiently by introducing a concept of an average unit weight of the objects in the routine work. In other words, the present inventors considered that weight adjustment work of the objects can be linked with the routine work by using this average unit weight.

The present invention has been developed under the above stated circumstances, and an object of the present invention is to provide an electronic weigher which is capable of weighing and managing the fixed-weight product more efficiently than a conventional electronic weigher. Another object of the present invention is to provide an electronic weigher system incorporating two or more electronic weighers having this configuration. A further object of the present invention is to provide a weighing work method of the objects which is capable of weighing and managing the fixed-weight product more efficiently than a conventional weighing work method.

### Solution to Problem

To achieve the above described objects, according to the present invention, there is provided an electronic weigher which adjusts a weight of objects by a routine work of weighing of the objects, comprising: a detector for detecting the weight of the objects; a processor which obtains an average unit weight of the objects in the routine work corresponding to an amount of the objects of one work unit in the routine work and provides a command representing the routine work required to adjust the weight of the objects so that the weight falls into a proper weight range of the objects by using the average unit weight, when the weight of the objects falls outside the proper weight range; and an indicator which outputs the command representing the routine work.

In accordance with this configuration, in the electronic weigher of the present invention, the degree of deficient or excess weight of the objects can be replaced by the command representing the routine work which is presented to the operator by using the average unit weight of the objects in the routine work. This can eliminate a need for an operator inexperienced in weighing work of the objects to perform trial-and-error in the weighing work of the objects. As a result, the fixed-weight product can be weighed and managed efficiently.

In the electronic weigher of the present invention, the processor may provide the command representing the routine work required to adjust the weight of the objects so that the weight reaches a value close to a lower limit value in the proper weight range of the objects by using the average unit weight, when the weight of the objects falls within the proper weight range.

In accordance with this configuration, in the electronic weigher of the present invention, the degree of the weight of the objects which deviates from the lower limit value in the proper weight range can be replaced by the command representing the routine work, which is presented to the operator, using the average unit weight of the objects of the routine work. This makes it possible to teach even an operator inexperienced in the weighing work of the objects so that the weight of the objects can reach the value close to the lower limit value in the proper weight range. As a result, a loss of the objects of the fixed-weight product can be reduced.

In the electronic weigher of the present invention, the command representing the routine work may be the number of times of one work unit in the routine work.

In the electronic weigher of the present invention, the number of times of one work unit in the routine work may be the number of times the objects are extracted by a weighing tool capable of scooping the objects when the weighing tool is used in the routine work, or the number of times an operator grabs the objects with the operator's hand.

In this configuration, for example, in a case where the weighing tool is used, it is selected from among weighing tools which are different in average unit weight. As a result, the fixed-weight product can be weighed and managed accurately.

In the electronic weigher of the present invention, the processor may obtain a weight difference between the objects before the weight of the objects is adjusted in accordance with the command representing the routine work and after the weight of the objects is adjusted in accordance with the command representing the routine work, by using the detector; and the processor may determine whether or not the average unit weight of the objects in the routine work is appropriate using a value derived by dividing the weight difference by the number of times of the one work unit in the routine work.

In this configuration, it can be determined whether or not the average unit weight of the objects in the routine work which is obtained initially is appropriate, based on the average unit weight of the objects in the routine work which is obtained thereafter.

According to the present invention, there is provided an electronic weigher system comprising the above stated electronic weigher which is incorporated into each of a first weigher from which the objects are extracted by using the routine work and a second weigher supplied with the objects extracted from the first weigher; wherein information required to adjust the weight of the objects in the second weigher so that the weight falls into the proper weight range is notified by the second weigher to the first weigher, and the processor of the first weigher determines whether or not the amount of the extracted objects is appropriate based on the information when the objects are extracted in the first weigher.

In this configuration, in the electronic weigher of the present invention, when the objects put on the tray of the second weigher is deficient and the objects are added to the objects put on the tray, the processor of the first weigher can determine whether or not the amount of the extracted objects is appropriate based on the information provided by the second weigher at a time point when the objects are extracted from the tray of the first weigher. Therefore, by adjusting the amount of the extracted objects appropriately when the objects are extracted from the tray of the first weigher, the extracted objects have only to be transferred once to the tray of the second weigher to make the weight of the objects in the second weigher fall into the proper weight range. As a result, work efficiency of weight adjustment of the objects in the second weigher can be improved.

In the electronic weigher system of the present invention, when the objects are extracted in the first weigher, the processor of the first weigher may provide the command representing the routine work required to adjust the weight of the objects in the second weigher so that the weight falls into the proper weight range, based on the amount of the extracted objects, and may output the command representing the routine work using the indicator of the first weigher.

According to the present invention, there is provided a weighing work method of objects which adjusts a weight of the objects by a routine work, comprising: obtaining an average unit weight of the objects in the routine work corresponding to an amount of the objects in one work unit in the routine work; putting the objects on a weighing platform of an electronic weigher; and providing a command representing the routine work required to adjust the weight of the objects so that the weight falls into a proper weight range of the objects using the average unit weight, when the weight of the objects which is detected by using the electronic weigher is outside the proper weight range of the objects.

In accordance with the above, in the weighing work method of the objects of the present invention, the degree of deficient or excess weight of the objects can be replaced by the command representing the routine work which is presented to the operator by using the average unit weight of the objects in the routine work. This can eliminate a need for an operator inexperienced in the weighing work of the objects to perform trial-and-error in the weighing work of the objects. As a result, the fixed-weight product can be weighed and managed efficiently.

The above and further objects, features and advantages of the invention will more fully be apparent from the following detailed description with reference to the accompanying drawings.

### Advantageous Effects of the Invention

In accordance with the present invention, it is possible to attain an electronic weigher which can weigh and manage the fixed-weight product more efficiently than a conventional electronic weigher. In addition, it is possible to attain an electronic weigher system incorporating two more electronic weighers having this configuration. Furthermore, it is possible to attain a weighing work method of the objects which can weigh and manage the fixed-weight product more efficiently than a conventional weighing work method.

### Brief Description of the Drawings

[Fig. 1] Fig. 1 is a view schematically showing an external appearance of an exemplary configuration of an electronic weigher according to Embodiment 1 of the present invention. Fig. 1A is a perspective view showing an overall configuration of the electronic weigher. Fig. 1B is a front view showing a display configuration of the electronic weigher.
[Fig. 2] Fig. 2 is a block diagram showing an exemplary internal configuration of the electronic weigher according to Embodiment 1 of the present invention.

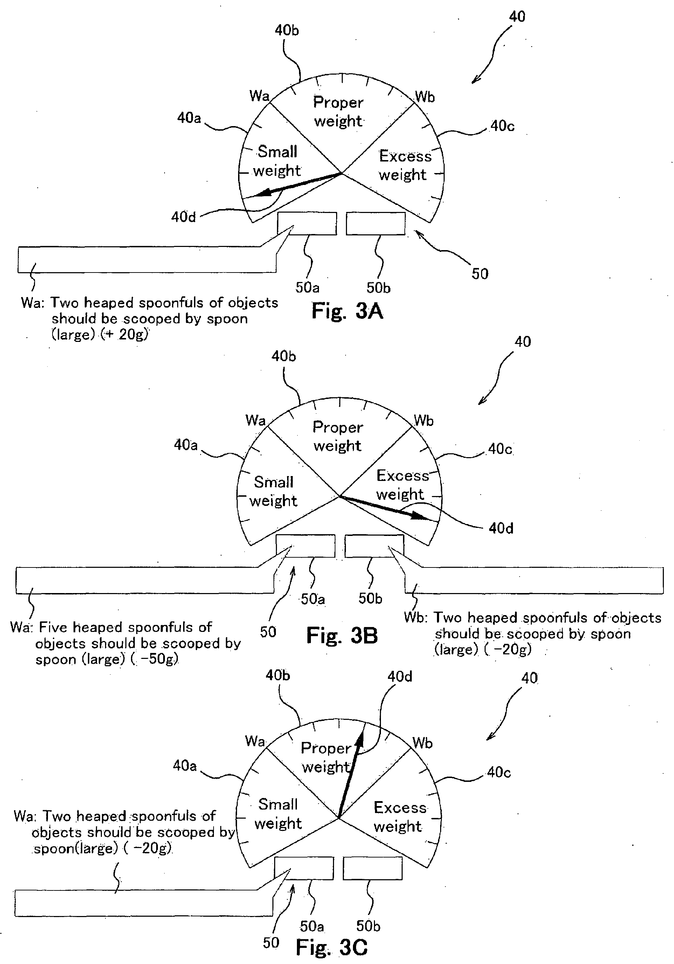

[Fig. 3] Fig. 3 is a view showing an operation of the electronic weigher according to Embodiment 1 of the present invention. Fig. 3A is a view showing an exemplary display configuration of a meter and an information display area in a case where a weight of the objects is below a proper weight range. Fig. 3B is a view showing an exemplary display configuration of the meter and the information display area in a case where the weight of the objects exceeds the proper weight range. Fig. 3C is a view showing an exemplary display configuration of the meter and the information display area in a case where the weight of the objects falls into the proper weight range.
[Fig. 4] Fig. 4 is a view schematically showing an external appearance of an exemplary configuration of an electronic weigher according to Embodiment 2 of the present invention. Fig. 4A is a perspective view showing an overall configuration of the electronic weigher. Fig. 4B is a front view showing major components of a display configuration of the electronic weigher.

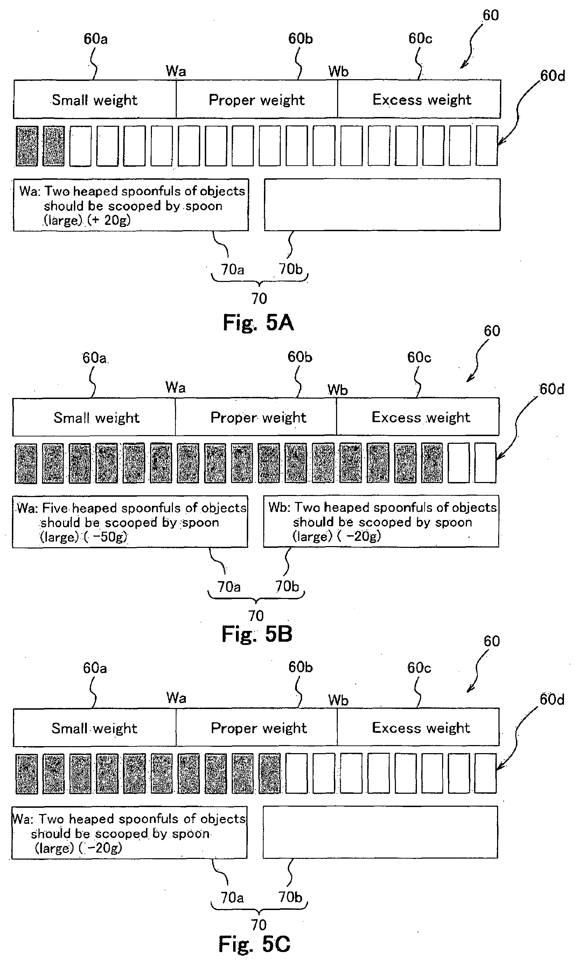

[Fig. 5] Fig. 5 is a view showing an operation of the electronic weigher according to Embodiment 2 of the present invention. Fig. 5A is a view showing an exemplary display configuration of a meter and an information display area in a case where the weight of the objects is below a proper weight range. Fig. 5B is a view showing an exemplary display configuration of the meter and the information display area in a case where the weight of the objects exceeds the proper weight range. Fig. 5C is a view showing an exemplary display configuration of the meter and the information display area in a case where the weight of the objects falls into the proper weight range.
[Fig. 6] Fig. 6 is a cross-sectional view schematically showing an exemplary weighing spoon used in a routine work of weighing of the objects.
[Fig. 7] Fig. 7 is a view schematically showing an external appearance of an exemplary configuration of an electronic weigher system according to Embodiment 3 of the present invention.
[Fig. 8] Fig. 8 is a view schematically showing an external appearance of an exemplary configuration of an electronic weigher system according to Embodiment 4 of the present invention.

### Description of Embodiments

Hereinafter, embodiments of the present invention and modified examples of the embodiments will be described in detail with reference to the drawings.

Throughout the drawings, the same or corresponding components are designated by the same reference numerals and will not be described in repetition in some cases.

The present invention is not limited to Embodiment 1, Embodiment 2, Embodiment 3 and Embodiment 4. That is, specific description given below merely provide features of an "electronic weigher", an "electric weigher system", and a "weighing work method of objects" of the present invention.

For example, the "electronic weigher" of the present invention is used to adjust the weight of the objects such that the weight falls into a proper weight range. In description below, when the weight of the objects is below the proper weight range, the weight of the objects is adjusted to reach a value close to a lower limit value (equal to or greater than the lower limit value) in the above proper weight range in order to minimize a loss of the objects. However, if the loss of the objects is somewhat allowable, the weight of the objects need not be adjusted to reach a value close to the lower limit value in the proper weight range but may be adjusted to reach a desired value within the above proper weight range (e.g., value close to a median value in the proper weight range).

In Embodiment 1 and Embodiment 2 described below, a work in which powdered objects α1 are scooped by a weighing spoon (large) 11 in a heaped state is provided as an example of "routine work of weighing of the objects" of the present invention. However, the present invention is not limited to this. Another examples of the "routine work of weighing of the objects" of the present invention will be specifically described in modified example 1 and modified example 2.

When the specific examples are described below by assigning suitable reference symbols to the same terms as components identifying the "electronic weigher", the "electric weigher system", and the "weighing work method of objects" and the corresponding terms, that specific device is an example of the corresponding components in the "electronic weigher", the "electric weigher system", and the "weighing work method of objects" of the present invention.

For example, "display device 101a" described in Embodiment 1 is an example of "indicator tool for outputting a command representing a routine work" which is a major component of the present invention. That is, although the "display device 101a" constitutes a visual indicator representing characters and graphics, such as a liquid crystal panel in Embodiment 1, the specific example of the "indicator for outputting a command representing a routine work" of the present invention is not limited to the visual indicator, but may be a device for outputting an audio command by a voice, such as a speaker.

### (Embodiment 1)

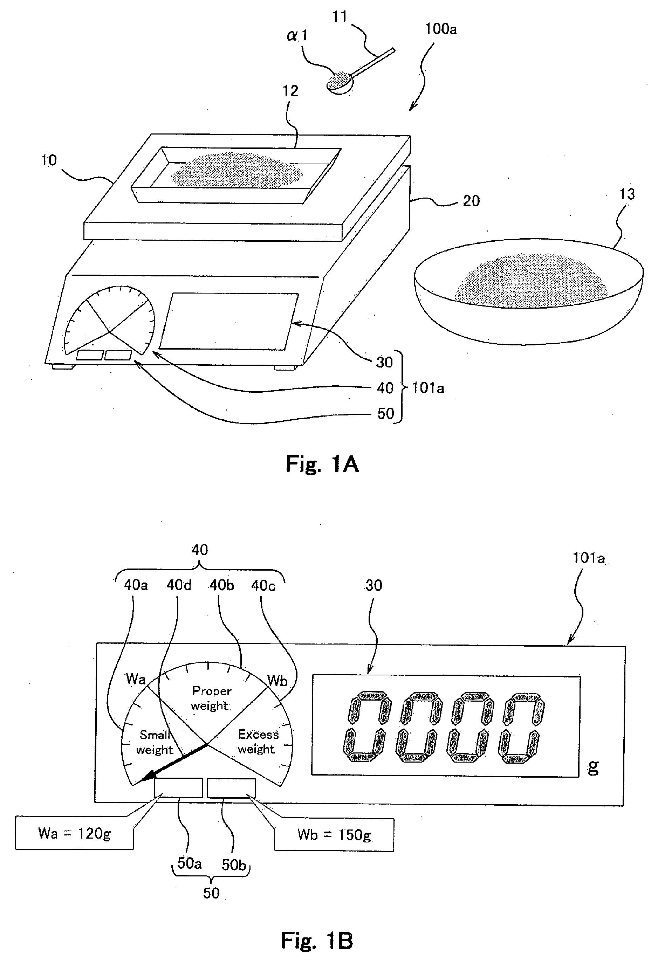

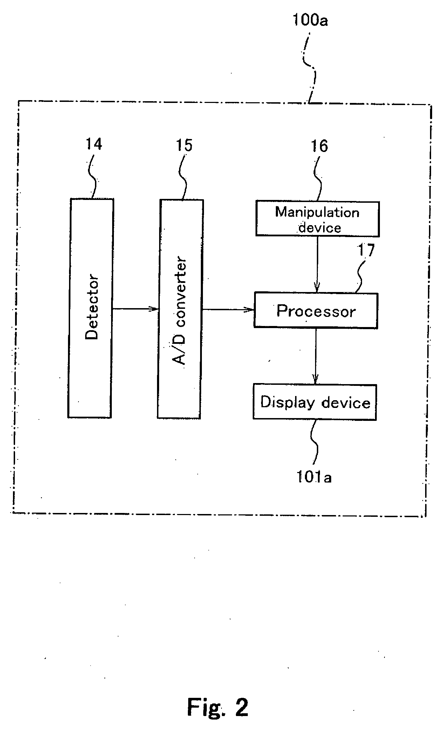

Fig. 1 is a view schematically showing an external appearance of an exemplary configuration of an electronic weigher according to Embodiment 1 of the present invention. Fig. 1A is a perspective view showing an overall configuration of the electronic weigher. Fig. 1B is a front view showing a display configuration of the electronic weigher. Fig. 2 is a block diagram showing an exemplary internal configuration of the electronic weigher.

An electronic weigher 100a of the present embodiment is used to weigh and manage a fixed-weight product in which objects (e.g., food) made to have a weight within a proper weight range is filled into a bag, a container, or the like. As shown in Fig. 1A, the electronic weigher 100a includes a weighing platform 10 on which a tray 12 loaded with powdered objects is placed, and a body 20. The weighing platform 10 is supported by a detector 14 (see Fig. 2) such as a load cell. The detector 14 sequentially weighs the objects put on the weighing platform 10.

As shown in Fig. 2, a processor 17 is built into the body 20 of the electronic weigher 100a.

The processor 17 is constituted by, for example, a CPU, a memory, etc.. The processor 17 receives an analog electric signal from the detector 14 via an A/D (analog/digital) converter 15. Thus, the weight of the objects of tare allowance (weight of only the objects put on the tray 12) which is placed on the weighing platform 10 and detected by the detector 14, can be obtained sequentially. As shown in Fig. 1A, a display device 1001a is attached to a front surface of the body 20 of the electronic weigher 100a and is able to display the weight of the obtained objects sequentially. The display device 101a will be described in detail.

Signals generated by the operator's manipulation by using a manipulation device 16 (see Fig. 2) attached to a suitable location of the body 20 are input to the processor 17 and stored in a memory of the processor 17. For example, in the electronic weigher 100a of the present embodiment, the operator inputs a lower limit value Wa and an upper limit value Wb (will be described in detail) in the proper weight range of the fixed-weight product by using the manipulation device 16. The processor 17 obtains the lower limit value Wa and the upper limit value Wb and stores these values in the memory. In this case, the lower limit value Wa and the upper limit value Wb in the proper weight range of the fixed-weight product are weights of tare allowance.

In the electronic weigher 100a of the present embodiment, an average unit weight (will be described in detail later) of the objects in the routine work is found in advance. Then, the processor 17 obtains this average unit weight and stores a value of the average unit weight in the memory. Thus, the processor 17 outputs (commands) helpful information in adjustment of the weight of the objects, which is presented to the operator via the display device 101a. The detail of this information will be described in detail later.

Next, a configuration of the display device 101a of the electronic weigher 100a will be described in detail.

As shown in Figs. 1A and 1B, the display device 101a includes a weight display area 30 of a digital type which displays the weight of the objects, a meter 40 of indicator needle type which displays the weight of the objects using an indicator needle 40d to indicate whether the weight of the objects falls within or outside of the proper weight range, and an information display area 50 including a first display area 50a and a second display area 50b which are able to display characters and numeric values. The display device 101a is constituted by, for example, a liquid crystal display panel, etc..

Next, a configuration of the meter 40 of the display device 101a will be described in detail with reference to Fig. 1B.

The meter 40 of the display device 101a includes a small weight range 40a representing that the weight of the objects is less than the lower limit value Wain the proper weight range, a proper weight range 40b representing that the weight of the objects falls within the proper weight range, and an excess weight range 40c representing that the weight of the objects exceeds the proper weight range. Each of the small weight range 40a, the proper weight range 40b and the excess weight range 40c has a fan form defining a portion of a circle. The meter 40 has an indicator needle 40d which can point the small weight range 40a, the proper weight range 40b or the excess weight range 40c and can be visually identified. This enables the operator to promptly determine that the weight of the objects falls within one of the small weight range 40a, the proper weight range 40b, and the excess weight range 40c.

Next, an exemplary operation of the electronic weigher 100a of the present embodiment will be described.

Fig. 3 is a view showing an operation of the electronic weigher according to Embodiment 1 of the present invention.

Fig. 3A shows an exemplary display configuration of the meter 40 and the information display area 50 in a case where the weight of the objects is below the proper weight range. Fig. 3B shows an exemplary display configuration of the meter 40 and the information display area 50 in a case where the weight of the objects exceeds the proper weight range. Fig. 3C shows an exemplary display configuration of the meter 40 and the information display area 50 in a case where the weight of the objects falls into the proper weight range.

As shown in Fig. 1, before the weight of the objects is detected, the lower limit value Wa and the upper limit value Wb in the proper weight range are displayed in the information display area 50. Specifically, the lower limit value Wa in the proper weight range is displayed on the first display area 50a, while the upper limit value Wb in the proper weight range is displayed on the second display area 50b. For example, when the lower limit value Wa in the proper weight range which is stored in the memory of the processor 17 is 120g, and the upper limit value Wb in the proper weight range which is stored in the memory of the processor 17 is 150g, as shown in Fig. 1B, information of "Wa = 120g" is displayed on the first display area 50a and information of "Wb = 150g" is displayed on the second display area 50b.

The tray 12 on which the objects of a certain amount are put is prepared. When weighing of the objects starts (weight of the objects is detected), the operator puts the tray 12 loaded with the objects, on the weighing platform 10. The operator performs an extraction work of the objects so that the weight of the objects put on the tray 12 falls into the proper weight range while checking the weight of the objects in the weight display area 30. For example, when the weight of the objects put on the tray 12 is an excess weight, the operator transfers the objects from the tray 12 to a container 13 by using a suitable extraction means (e.g., weighing tool for extracting a fixed-amount of objects such as a weighing spoon (large) 11) of the objects. On the other hand, when the weight of the objects put on the tray 12 is a small weight, the operator transfers the objects from the container 13 to the tray 12 by using the weighing spoon (large) 11.

Although the weighing spoon (large) 11 is illustrated as the extraction means of the objects, the present invention is not limited to this. The extraction means of the objects may be any means which can scoop the objects (example of another means will be described in modified example 2).

When the weight of the objects comes close to the proper weight range, after weighing of the objects starts, it becomes necessary to adjust the weight of the objects so that the weight falls into the proper weight range. In this case, it is convenient that the weight of the objects can be adjusted by the routine work of weighing of the objects.

This will be described in conjunction with the weighing spoon (large) 11. A volume of the objects α1 which is one heaped spoonful of the objects to be scooped by the weighing spoon (large) 11, should be substantially constant unless a repose angle of the objects is changed. Therefore, in one work unit of the routine work of the objects in which one heaped spoonful of the objects α1 is scooped by the weighing spoon (large) 11, a change amount in the volume of the objects (volume of the objects which is one heaped spoonful of the objects α1, which can be scooped by the operator using the weighing spoon (large) 11), is a substantially fixed amount.

Then, the average unit weight of the objects in the routine work which is the weight of the objects corresponding to the amount of the objects (volume of the objects) in one work unit of the routine work is found. The average unit weight is set in the electronic weigher 100a. The average unit weight of the objects in the routine work can be found in various methods which will be described in detail in modified example 4.

As described above, the weight adjustment work of the objects can be linked with the routine work by using this average unit weight. As a result, the fixed-weight product can be weighed and managed efficiently

Specifically, as shown in Fig. 3A, when the weight of the objects is less than the lower limit value Wa in the proper weight range, the indicator needle 40d of the meter 40 points a position corresponding to the weight of the objects in the small weight range 40a. A command indicating the routine work required to adjust the weight of the objects so that the weight falls into the proper weight range 40b is displayed on the first display area 50a of the information display area 50.

In the present embodiment, as the command representing the routine work, the number of times of one work unit in the routine work is illustrated as described below (the same occurs in the examples of Figs. 3B and 3C).

For example, it is assumed that the indicator needle 40d points 100g which is outside the proper weight range of the objects and the average unit weight of the objects in the routine work, corresponding to one heaped spoonful of the objects α1 which is scooped by the weighing spoon (large) 11, is 10g.

The processor 17 may output to the first display area 50a a command stating "Wa: two heaped spoonfuls of objects should be scooped by the spoon (large) (+ 20g)" as an example of the command representing the routine work of weighing of the objects. This command means that it is necessary to increase the objects put on the tray 12 with an amount of 20g to adjust a present (current) weight of the objects which is the fixed-weight product so that the weight reaches a value which is equal to or greater than the lower limit value Wa ( = 120g) (preferably close to the lower limit value Wa) in the proper weight range and it is necessary to transfer at least the two heaped spoonfuls of objects by the weighing spoon (large) 11 from the container 13 to the tray 12.

As shown in Fig. 3B, when the weight of the objects is greater than the upper limit value Wb in the proper weight range, the indicator needle 40d of the meter 40 points a position corresponding to the weight of the objects in the excess weight range 40c. In this case, a command representing the routine work required to adjust the weight of the objects so that the weight falls into the proper weight range 40b is displayed on the first display area 50a and the second display area 50b of the information display area 50.

For example, it is assumed that the indicator needle 40d points 170g which is outside the proper weight range of the objects, and the average unit weight of the objects in the routine work, corresponding to one heaped spoonful of the objects α1 which is scooped by the weighing spoon (large) 11, is 10g.

The processor 17 may output to the second display area 50b a command stating "Wb: two heaped spoonfuls of objects should be scooped by the spoon (large) (-20g)" as an example of the command representing the routine work of weighing of the objects. This command means that it is necessary to reduce the objects with an amount of 20g from the objects put on the tray 12 to adjust a present (current) weight of the objects which is the fixed-weight product so that the weight reaches a value which is close to the upper limit value Wb (= 150g) (equal to or less than the upper limit value Wb) in the proper weight range and it is necessary to transfer the two heaped spoonfuls of objects by the weighing spoon (large) 11 from the tray 12 to the container 13.

Also, the processor 17 may output to the first display area 50a a command stating "Wa: five heaped spoonfuls of objects should be scooped by the spoon (large) (-50g)" as another example of the command representing the routine work of weighing of the objects. This command means that it is necessary to reduce the objects with an amount of 50g from the objects put on the tray 12 to adjust a present (current) weight of the objects which is the fixed-weight product so that the weight reaches a value close to the lower limit value Wa (= 120g) (equal to or greater than the lower limit value Wa) in the proper weight range and it is necessary to transfer five heaped spoonfuls of objects by the spoon (large) 11 from the tray 12 to the container 13.

As described above, in the electronic weigher 100a of the present embodiment, the degree of deficient or excess weight of the objects can be replaced by the command representing the routine work which is presented to the operator by using the average unit weight of the objects of the routine work. This can eliminate a need for an operator inexperienced in weighing work of the objects to perform trial-and-error in the weighing work of the objects. As a result, the fixed-weight product can be weighed and managed efficiently.

As shown in Fig. 3C, when the weight of the objects falls within the proper weight range, the indicator needle 40d of the meter 40 points a position corresponding to the weight of the objects in the proper weight range 40b. In this case, a command representing the routine work required to adjust the weight of the objects so that the weight reaches a value close to the lower limit value Wa in the proper weight range 40b is displayed on the first display area 50a of the information display area 50.

For example, it is assumed that the indicator needle 40d points 140g which is within the proper weight range of the objects and the average unit weight of the objects in the routine work, corresponding to one heaped spoonful of the objects α1 which is scooped by the weighing spoon (large) 11, is 10g.

The processor 17 may output to the first display area 50a a command stating "Wa: two heaped spoonfuls of objects should be scooped by the spoon (large) (- 20g)" as an example of the command representing the routine work of weighing of the objects. This command means that it is necessary to reduce the objects with an amount or 20g from the objects put on the tray 12 to adjust a present (current) weight of the objects which is the fixed-weight product so that the weight reaches a value close to the lower limit value Wa ( = 120g) (equal to or greater than the lower limit value Wa) in the proper weight range of the objects and it is necessary to transfer two heaped spoonfuls of objects by the weighing spoon (large) 11 from the tray 12 to the container 13.

As described above, in the electronic weigher 100a of the present embodiment, the degree of the weight of the objects which deviates from the lower limit value Wa in the proper weight range can be replaced by the command representing the routine work, which is presented to the operator, using the average unit weight of the objects in the routine work. This makes it possible to teach even an operator inexperienced in the weighing work of the objects so that the weight of the objects can reach the value close to the lower limit value Wa in the proper weight range. As a result, a loss of the objects of the fixed-weight product can be reduced.

### (Embodiment 2)

In the electronic weigher 100a of Embodiment 1, the display device 101a includes the meter 40 of the indicator needle type which points whether weight of the objects falls within or outside the proper weigh range by using the indicator needle 40d. In an electronic weigher 100b of the present embodiment, a display device 101b includes a meter 60 of a bar graph type which displays information representing whether the weight of the objects falls within or outside the proper weigh range by using a bar graph 60d.

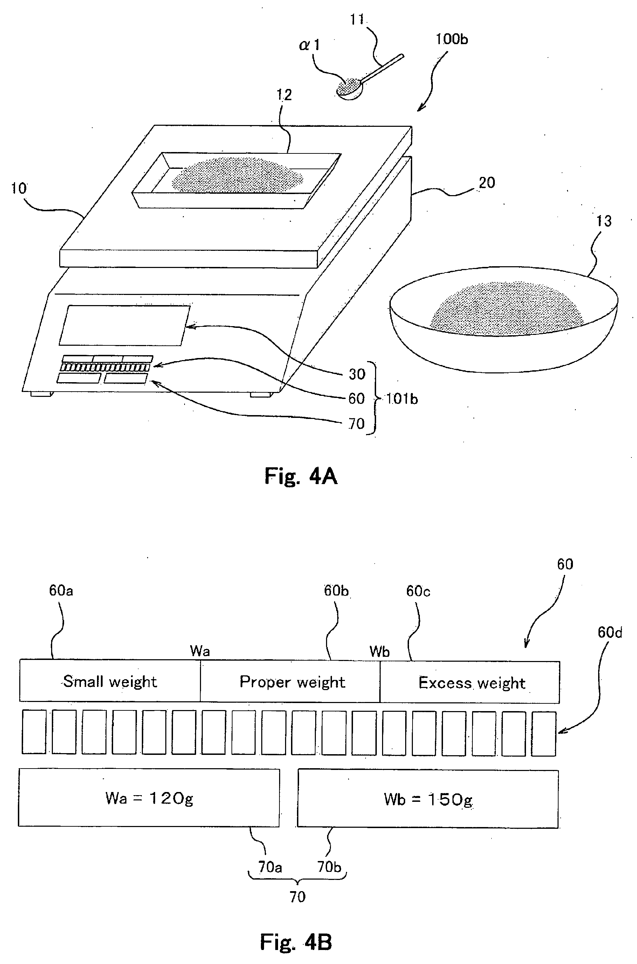

Fig. 4 is a view schematically showing an external appearance of an exemplary configuration of an electronic weigher according to Embodiment 2 of the present invention. Fig. 4A is a perspective view showing an overall configuration of the electronic weigher. Fig. 4B is a front view showing major components of a display configuration of the electronic weigher. The electronic weigher 100b has the same internal configuration as that of the electronic weigher 100a. Therefore, the internal configuration of the electronic weigher 100b will not be described.

As shown in Fig. 4, the display device 101b of the electronic weigher 100b of the present embodiment, includes a weight display area 30 of a digital type which displays the weight of the objects, the meter 60 of the bar graph type which represents whether the weight of the objects falls within or outside of the proper weight range, using the bar graph 60d, and an information display area 70 including a first display area 70a and a second display area 70b on which characters and numeric values are displayed. The display device 101b is constituted by, for example, a liquid crystal display panel, etc..

The meter 60 of the display device 101b includes a small weight range 60a representing that the weight of the objects is less than the lower limit value Wa in the proper weight range, a proper weight range 60b representing that the weight of the objects falls within the proper weight range, and an excess weight range 60c representing that the weight of the objects exceeds the proper weight range. Each of the small weight range 60a, the proper weight range 60b and the excess weight range 60c has a rectangular form defining a portion of a band-shaped area. The meter 60 has the bar graph 60d which can indicate the small weight range 60a, the proper weight range 60b or the excess weight range 60c and can be visually identified easily. The bar graph 60d includes a number of sub-areas arranged in parallel with the small weight range 60a, the proper weight range 60b and the excess weight range 60c immediately below the weight ranges 60a, 60b and 60c. These sub-areas are lighted (turned ON) and non-lighted (turned OFF). This allows the operator to promptly determine that the weight of the objects falls within one of the small weight range 60a, the proper weight range 60b and the excess weight range 60c.

Next, an exemplary operation of the electronic weigher 100b of the present embodiment will be described.

Fig. 5 is a view showing an operation of the electronic weigher according to Embodiment 2 of the present invention.

Fig. 5A shows an exemplary display configuration of the meter 60 and the information display area 70 in a case where the weight of the objects is below the proper weight range. Fig. 5B shows an exemplary display configuration of the meter 60 and the information display area 70 in a case where the weight of the objects exceeds the proper weight range. Fig. 5C shows an exemplary display configuration of the meter 60 and the information display area 70 in a case where the weight of the objects falls within the proper weight range. In Fig. 5, for the sake of convenience, an ON-state (lighted state) of the bar graph 60d is expressed by a gray color, while an OFF-state (non-lighted state) of the bar graph 60d is expressed by a while color.

As shown in Fig. 4B, before the weight of the objects is detected, the lower limit value Wa and the upper limit value Wb in the proper weight range are displayed on the information display area 70. Specifically, the lower limit value Wa in the proper weight range is displayed on a first display area 70a, while the upper limit value Wb in the proper weight range is displayed on a second display area 70b. For example, when the lower limit value Wa in the proper weight range which is stored in the memory of the processor 17 is 120g, and the upper limit value Wb in the proper weight range which is stored in the memory of the processor 17 is 150g, as shown in Fig. 4B, information of "Wa = 120g" is displayed on the first display area 70a and information of "Wb = 150g" is displayed on the second display area 70b.

The tray 12 on which the objects of a certain amount are put is prepared. When weighing of the objects starts (weight of the objects is detected), the operator puts the tray 12 loaded with the objects, on the weighing platform 10. The operator performs an extraction work of the objects so that the weight of the objects put on the tray 12 falls into the proper weight range while checking the weight of the objects in the weight display area 30.

For example, when the weight of the objects put on the tray 12 is an excess weight, the operator transfers the objects from the tray 12 to the container 13 by using the suitable extraction means (e.g., weighing tool for extracting a fixed-amount of the objects such as a weighing spoon (large) 11) of the objects. On the other hand, when the weight of the objects put on the tray 12 is a small weight, the operator transfers the objects from the container 13 to the tray 12 by using the weighing spoon (large) 11.

When the weight of the objects comes close to the proper weight range, after weighing of the objects starts, it becomes necessary to adjust the weight of the objects so that the weight falls into the proper weight range. In this case, it is convenient that the weight of the objects can be adjusted by the routine work of weighing of the objects.

This will be described in conjunction with the weighing spoon (large) 11. A volume of the objects α1 which is one heaped spoonful of the objects to be scooped by the weighing spoon (large) 11, should be substantially constant unless a repose angle of the objects α1 is changed. Therefore, in a work unit of the routine work of weighing of the objects in which one heaped spoonful of the objects α1 is scooped by the weighing spoon (large) 11, a change amount in the volume of the objects (volume of the objects which is one heaped spoonful of the objects, which can be scooped by the operator using the weighing spoon (large) 11), is a substantially fixed amount.

Then, the average unit weight of the objects in the routine work which is the weight of the objects corresponding to the amount of the objects (volume of the objects) in one work unit of the routine work is found. The average unit weight is set in the electronic weigher 100b. The average unit weight of the objects in the routine work can be found in various methods and will be described in detail later in modified example 4.

As described above, a weight adjustment work of the objects can be linked with the routine work by using this average unit weight. As a result, the fixed-weight product can be weighed and managed efficiently.

Specifically, as shown in Fig. 5A, when the weight of the objects is less than the lower limit value Wa in the proper weight range, all of the sub-areas covering up to a position of the small weight range 60a corresponding to the weight of the objects, in the bar graph 60d of the meter 60, are lighted (turned ON).

In this case, a command representing the routine work required to adjust the weight of the objects so that the weight falls into the proper weight range 60b is displayed on the first display area 70a of the information display area 70.

In the present embodiment, as the command representing the routine work, the number of times of one work unit of the routine work is illustrated as described below (the same occurs in the examples of Figs. 5B and 5C).

For example, it is assumed that the bar graph 60d indicates 100g which is outside the proper weight range of the objects and the average unit weight of the objects in the routine work, corresponding to one heaped spoonful of the objects α1 which is scooped by the weighing spoon (large) 11, is 10g.

The processor 17 may output to the first display area 70a a command stating "Wa: two heaped spoonfuls of objects should be scooped by the spoon (large) (+ 20g)" as an example of the command representing the routine work of weighing of the objects. This command means that it is necessary to increase the objects put on the tray 12 with an amount of 20g to adjust a present (current) weight of the objects which is the fixed-weight product so that the weight reaches a value which is equal to or greater than the lower limit value Wa (= 120g) (preferably close to the lower limit value Wa) in the proper weight range and it is necessary to transfer at least the two heaped spoonfuls of objects by the weighing spoon (large) 11 from the container 13 to the tray 12.

As shown in Fig. 5B, when the weight of the objects is greater than the upper limit value Wb in the proper weight range, all of the sub-areas covering up to a position of the excess-weight range 60c corresponding to the weight of the objects, in the bar graph 60d of the meter 60, are lighted (turned ON). In this case, a command representing the routine work required to adjust the weight of the objects so that the weight falls into the proper weight range 60b is displayed on the first display area 70a and the second display area 70b of the information display area 70.

For example, it is assumed that the bar graph 70d indicates 170g which is outside the proper weight range of the objects and the average unit weight of the objects in the routine work, corresponding to one heaped spoonful of the objects α1 which is scooped by the weighing spoon (large) 11, is 10g.

The processor 17 may output to the second display area 70b a command stating "Wb: two heaped spoonfuls of objects should be scooped by the spoon (large) (- 20g)" as an example of the command representing the routine work of weighing of the objects. This command means that it is necessary to reduce the objects with an amount of 20g from the objects put on the tray 12 to adjust a present (current) weight of the objects which is the fixed-weight product so that the weight reaches a value which is close to the upper limit value Wb(= 150g) (equal to or less than the upper limit value Wb) in the proper weight range and it is necessary to transfer the two heaped spoonfuls of objects by the weighing spoon (large) 11 from the tray 12 to the container 13.

The processor 17 may output to the first display area 70a a command stating "Wa: five heaped spoonfuls of objects should be scooped by the spoon (large) (- 50g)" as another example of the command representing the routine work of weighing of the objects. This command means that it is necessary to reduce the objects with an amount of 50g from the objects put on the tray 12 to adjust a present (current) weight of the objects which is the fixed-weight product so that the weight reaches a value close to the lower limit value Wa (= 120g) (equal to or greater than the lower limit value Wa) in the proper weight range and it is necessary to transfer five heaped spoonfuls of objects by the weighing spoon (large) 11 from the tray 12 to the container 13.

As described above, in the electronic weigher 100b of the present embodiment, the degree of deficient or excess weight of the objects can be replaced by the command representing the routine work which is presented to the operator, by using the average unit weight of the objects of the routine work. This can eliminate a need for an operator inexperienced in the weighing work of the objects to perform trial-and-error in weighing work of the objects. As a result, the fixed-weight product can be weighed and managed efficiently.

As shown in Fig. 5C, when the weight of the objects falls within the proper weight range, all of the sub-areas covering up to a position of the proper weight range 60b corresponding to the weight of the objects, in the bar graph 60d of the meter 60, are lighted (turned ON). In this case, a command representing the routine work required to adjust the weight of the objects so that the weight reaches a value close to the lower limit value Wa in the proper weight range 60b is displayed on the first display area 70a of the information display area 70.

For example, it is assumed that the bar graph 60d indicates 140g which is within the proper weight range of the objects and the average unit weight of the objects in the routine work, corresponding to one heaped spoonful of the objects α1 which is scooped by the weighing spoon (large) 11, is 10g.

The processor 17 may output to the first display area 70a a command stating "Wa: two heaped spoonfuls of objects should be scooped by the spoon (large) (- 20g)" as an example of the command representing the routine work of weighing of the objects. This command means that it is necessary to reduce the objects with an amount of 20g from the objects put on the tray 12 to adjust a present (current) weight of the objects which is the fixed-weight product so that the weight reaches a value which is close to the lower limit value Wa (= 120g) (equal to or greater than the lower limit value Wa) in the proper weight range and it is necessary to transfer two heaped spoonfuls of objects by the weighing spoon (large) 11 from the tray 12 to the container 13.

As described above, in the electronic weigher 100b of the present embodiment, the degree of the weight of the objects which deviates from the lower limit value Wa in the proper weight range can be replaced by the command representing the routine work, which is presented to the operator, using the average unit weight of the objects in the routine work. This makes it possible to teach even an operator inexperienced in the weighing work of the objects so that the weight of the objects reaches a value close to the lower limit value Wa in the proper weight range. As a result, a loss of the objects of the fixed-weight product can be reduced.

### (Modified example 1 of Embodiment 1 and Embodiment 2)

In the electronic weigher 100a of Embodiment 1 and the electronic weigher 100b of Embodiment 2, as the example of the routine work of weighing of the objects, one heaped spoonful of the objects α1 is scooped by the weighing spoon (large) 11. However, the routine work is not limited to this.

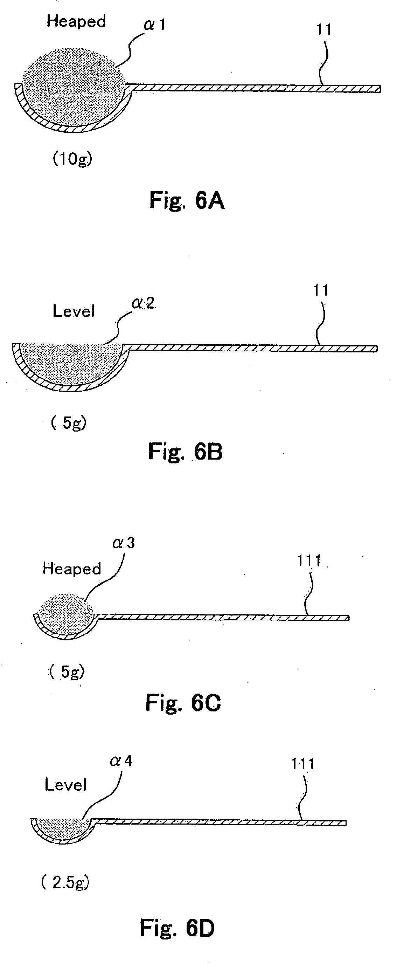

Fig. 6 is a cross-sectional view schematically showing an exemplary weighing spoon used in the routine work of weighing of the objects.

Specifically, there are illustrated an example in which one heaped spoonful of the objects α1 is scooped by using the weighing spoon (large) 11 (Fig. 6A), and an example in which one level spoonful of objects α2 is scooped by using the weighing spoon (large) 11 (Fig. 6B). In these examples, one heaped spoonful of objects α1 of the weighing spoon (large) 11 is 10g, while one level spoonful of objects α2 of the weighing spoon (large) 11 is 5g. In other words, the average unit weight of the objects in the routine work using the weighing spoon (large) 11 in the case of one heaped spoonful of the objects is 10g, while the average unit weight of the objects in the routine work using the weighing spoon (large) 11 in the case of one level spoonful of the objects is 5g.

In addition, there are illustrated an example in which one heaped spoonful of the objects α3 is scooped by using a weighing spoon (small) 111 (Fig. 6C), and an example in which one level spoonful of the objects α4 is scooped by using the weighing spoon (small) 111(Fig. 6B). In these examples, one heaped spoonful of the objects α3 of the weighing spoon (small) 111 is 5g, while one level spoonful of the objects α4 of the weighing spoon (small) 111 is 2.5g. In other words, the average unit weight of the objects in the routine work using the weighing spoon (small) 111 in the case of one heaped spoonful of the objects is 5g, while the average unit weight of the objects in the routine work using the weighing spoon (small) 111 in the case of one level spoonful of the objects is 2.5g.

The weighing spoon (small) 111 can set the average unit weight more finely and with a higher resolution than the weighing spoon (large) 11. The use of the level spoonful of objects of the weighing spoon (large) 11 and the level spoonful of objects of the weighing spoon (small) 111 as shown in Figs. 6B and 6D, respectively, can suppress non-uniformity in a change in the volume of the objects between the routine works and set the average unit weight more finely and with a higher resolution, as compared to the use of the heaped spoonful of objects of the weighing spoon (large) 11 and the heaped spoonful of objects of the weighing spoon (small) 111.

As described above, various routine works which are different in average unit weight can be selected by a combination of the heaped state and the level state using the weighing spoon (large) 11 and the weighing spoon (small) 111. Thus, the fixed-weight product can be weighed and managed appropriately according to its purpose.

For example, when the indicator needle 40d or the bar graph 60d indicates 100g which is outside of the proper weight range, the processor 17 can provide various commands as follows.

In a first example, the processor 17 may output to the first display area 50a, a command stating "Wa: four level spoonfuls of objects should be scooped by the spoon (large) (+ 20g)". This command means that it is necessary to transfer at least four level spoonfuls of objects by the weighing spoon (large) 11 from the container 13 to the tray 12 tao adjust a present (current) weight of the objects which is the fixed-weight product so that the weight reaches a value which is equal to or greater than the lower limit value Wa (= 120g) (preferably close to the lower limit value Wa) in the proper weight range of the objects.

In this case, the fixed-weight product can be weighed and managed more accurately as compared to the command of Embodiment 1 (command in Fig. 3A) and the command of Embodiment 2 (command in Fig. 5A). However, the number of times of the routine work (the number of times of extraction of the objects using the weighing spoon (large) 11) increases and there causes a need for a work for leveling the objects in the weighing spoon (large) 11, as compared to the command of Embodiment 1 (command in Fig. 3A) and the command of Embodiment 2 (command in Fig. 5A).

In a second example, the processor 17 may output to the first display area 50a, a command stating "Wa: eight level spoonfuls of objects should be scooped by the spoon (small) (+20g)". This command means that it is necessary to transfer at least eight level spoonfuls of objects by the weighing spoon (small) 111 from the container 13 to the tray 12 to adjust a present (current) weight of the objects which is the fixed-weight product so that the weight reaches a value which is equal to or greater than the lower limit value Wa ( = 120g) (preferably close to the lower limit value Wa) in the proper weight range of the objects.

In this case, the fixed-weight product can be weighed and managed more accurately as compared to the first example. However, the number of times of the routine work (the number of times of extraction of the objects using the weighing spoon (small) 111) increases and the number of times of leveling the objects in the weighing spoon (small) 111 increases, as compared to the first example.

In a third example, the processor 17 may output to the first display area 50a, a command stating "Wa: one heaped spoonful of objects should be scooped by the spoon (large)(+ 10g) and two level spoonfuls of objects should be scooped by the spoon (large) (+ 10g)". This command means that it is necessary to transfer at least one heaped spoonful of objects by the weighing spoon (large) 11 and two level spoonfuls of objects by the weighing spoon (large) 11, from the container 13 to the tray 12 to adjust a present (current) weight of the objects which is the fixed-weight product so that the weight reaches a value which is equal to or greater than the lower limit value Wa ( = 120g) (preferably close to the lower limit value Wa) in the proper weight range of the objects.

In this case, in the third example, accuracy with which the fixed-weight product is weighed and managed becomes a little lower than in the first example. However, the number of times of the routine work (the number of times of extraction of the objects by the weighing spoon (large) 11) can be lessened and the number of times of leveling of the objects in the weighing spoon (large) 11 can be lessened, as compared to the first example.

### (Modified example 2 of Embodiment 1 and Embodiment 2)

In the electronic weigher 100a of Embodiment 1 and the electronic weigher 100b of Embodiment 2, the example in which the powdered material is illustrated as the objects and the weighing spoon (large) 11 which can scoop the powered objects α1 is used in the routine work has been described. However, the present invention is not limited to this.

For example, in a case where the operator can grab solid objects of a specified number, the routine work in weighing of the objects may be the operator's grabbing work. In this case, an average unit weight of the objects in the routine work corresponds to an amount of the objects in one work unit in the grabbing work (routine work) of the operator (e.g., number of the objects which can be grabbed by the operator's hand), and a value of this average unit weight can be easily obtained. That is, the average unit weight of the objects in the routine work can be obtained by multiplying a unit weight of one object by the number of objects which can be grabbed by the operator's hand.

Hereinafter, a case where the operator can grab three objects will be described. The processor 17 obtains the weight of the three objects (e.g., "10g") as the average unit weight of the grabbing work (routine work).

In a case where the weight of the objects is about 20g less than the lower limit value Wa in the proper weight range, the processor 17 may output to the first display area 50a or the first display area 70a a command "Wa: three objects should be grabbed twice by the operator's hand (+ 20g)" as an example of a command representing the routine work of weighing of the objects. This command means that it is necessary to increase the objects put on the tray 12 with an amount of 20g to adjust a present (current) weight of the objects(s) which is the fixed-weight product so that the weight reaches a value close to the lower limit value Wa (= 120g) (equal to or greater than the lower limit value Wa) in the proper weight range and it is necessary to transfer at least six objects by grabbing the three objects twice with the operator's hand from the container 13 to the tray 12.

### (Modified example 3 of Embodiment 1 and Embodiment 2)

In the electronic weigher 100a of Embodiment 1 and the electronic weigher 100b, of Embodiment 2, the tray 12 on which some objects are put is prepared when weighing of the objects starts (weight of the objects is detected). In this case, if the weight of the objects put on the tray 2 is adjusted in volume in advance by using a weighing tool or the like in the routine work, then adjustment of the weight which takes place thereafter can be easily performed.

For example, it is assumed that the lower limit value Wa in the proper weight range of the objects which is the fixed-weight product is 120g, and the average unit weight of the objects in the routine work, corresponding to one heaped spoonful of the objects α1 which is scooped by the weighing spoon (large) 11, is 10g. In this case, it is desirable to extract twelve heaped spoonfuls of objects from the container 13 by using the weighing spoon (large) 11 and put the extracted objects on the tray 12 which is empty. This allows the weight of the objects put on the tray 12 to be set to a value close to 120g. Therefore, thereafter, the weight of the objects can be adjusted easily in the routine wok of weighing of the objects.

### (Modified example 4 of Embodiment 1 and Embodiment 2)

In the electronic weigher 100a of Embodiment 1 and the electronic weigher 100b of Embodiment 2, the average unit weight of the objects in the routine work can be found by various methods. Therefore, specific examples in which the average unit weight of the objects in the routine work can be found will be described hereinafter.

Firstly, if a specific weight of the objects is already known, the average unit weight of the objects in the routine work can be found in such a manner that an amount of the objects (volume of the objects) of one work unit in the routine work is converted into the weight using a specific weight of the obj ects. In this case, the average unit weight may be input to the processor 17 by using the manipulation device 16. In this way, the processor 17 can obtain the average unit weight of the objects in the routine work.

Secondarily, the weight of the objects corresponding to the amount of the objects (volume of the objects) of one work unit in the routine work is measured by the electronic weigher 101a or 101b, thereby obtaining the average unit weight of the objects in the routine work. For example, one work unit in the routine work is carried out plural times, and the objects are put on the tray 12 of the electronic weigher 101a or 101b in every one work unit. Thereupon, the processor 17 of the electronic weigher 101a or 101b calculates the average unit weight automatically from (total weight of the objects put on the tray 12 in the routine work) /(the number of times of one work unit in the routine work). Thus, the processor 17 can obtain the average unit weight of the objects in the routine work.

Thirdly, by using a weighing means other than the electronic weigher 101a or 101b, the average unit weight is calculated automatically as in the above second method and calculated data may be directly input to the processor 17 by using the manipulation device 16. Thus, the processor 17 can obtain the average unit weight of the objects in the routine work.

### (Modified example 5 of Embodiment 1 and Embodiment 2)

In the electronic weigher 100a of Embodiment 1 and the electronic weigher 100b of Embodiment 2, the average unit weight of the objects in the routine work is obtained in the processor 17. Then, the processor 17 provides a command representing a routine work required to adjust the weight of the objects so that the weight falls into the proper weight range, by using the value of the average unit weight. However, such an average unit weight may not be accurate, or change with a passage of time.

Accordingly, a technique will now be described, in which after obtaining the average unit weight of the objects in the.routine work, the processor 17 determines whether or not the average unit weight of the objects in the routine work which is obtained initially (hereinafter referred to as "average unit weight (initial value)") is appropriate, at a suitable time, based on the average unit weight of the objects in the routine work which is obtained subsequently (most recently) (hereinafter referred to as "average unit weight (most recent value)") and compensation can be made for the overage weight if it is determined that this value is not appropriate.

When the weight adjustment of the objects is performed by the routine work, initially, the processor 17 obtains a weight difference in weight of the objects before and after weight adjustment of the objects is performed in accordance with the command representing the routine work, by using the detector 14.

Then, the processor 17 can derive a value obtained by dividing this weight difference by the number of times of one work unit in the routine work. The calculated value is the above stated average unit weight (most recent value). Therefore, the processor 17 compares the average unit value (initial value) to the average unit weight (most recent value), to determine whether or not the average unit weight (initial value) is appropriate. If there is a difference between these values, the processor 17 determines that the average unit value (initial value) is not appropriate, and makes compensation for the average unit value (initial value) using the average unit value (most recent value). As the specific method of making compensation for the average unit value (initial value), various publicly known methods such as moving average may be used. Therefore, the detail will not be described.

### (Embodiment 3)

Although in Embodiment 1 and Embodiment 2, the single electronic weighers 100a and 100b adjust the weight of the objects, an electronic weigher system 500A including two or more electronic weighers may be used as will be described below.

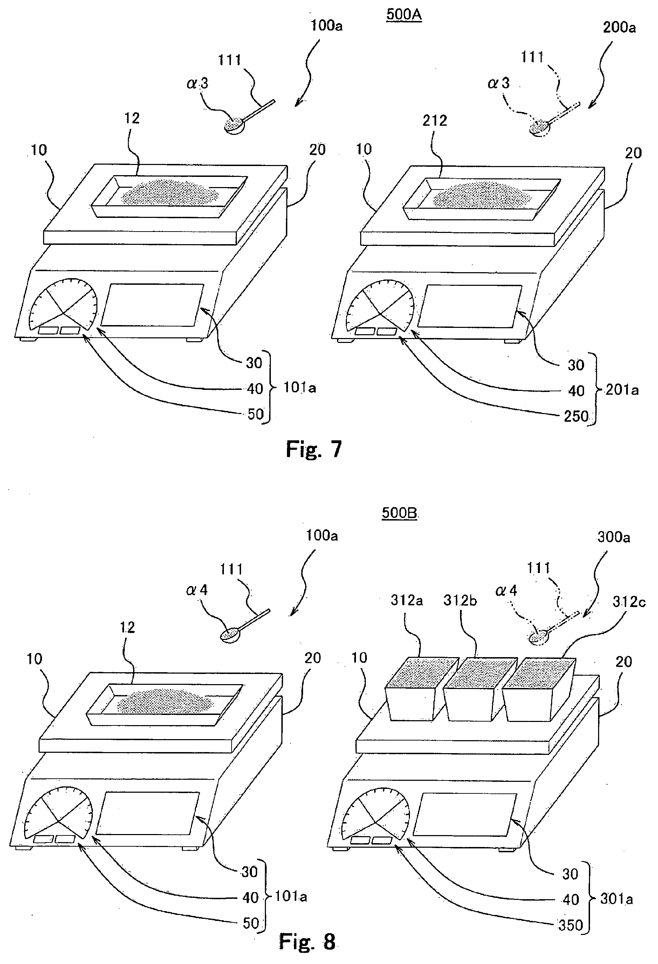

Fig. 7 is a view schematically showing an external appearance of an exemplary configuration of an electronic weigher system according to Embodiment 3 of the present invention.

As shown in Fig. 7, the electronic weigher system 500A includes the electronic weigher 100a (see Fig. 1), and an electronic weigher 200a, and is configured in such a manner that the processor 17 (see Fig. 2) of the electronic weigher 100a and a processor (not shown) of the electronic weigher 200a are able to communicate with each other via radio or via a wire.

A configuration of the electronic weigher 200a is identical to that of the electronic weigher 100a of Embodiment 1. Therefore, the configuration of the electronic weigher 200a will not be described in repetition.

In the electronic weigher system 500A of the present embodiment, a use mode will be described, in which the objects of the fixed-weight product are put on the tray 12 of the electronic weigher 100a, the objects of the fixed-weight product are put on the tray 212 of the electronic weigher 200a, and weight adjustment of the objects is performed. However, the present invention is not limited to this. For example, another use mode may be used, in which in the electronic weigher 100a, the objects of the fixed-weight product are put on the tray 12, and weight adjustment of the objects is performed, while in the electronic weigher 200a, only measurement of the weight of the objects is performed to add the objects to the objects put on the tray 12.

Next, an exemplary operation of the electronic weigher system 500A of the present embodiment will be described.

Like modified example 3, eleven heaped spoonfuls of objects are extracted from the container 13 (see Fig. 1) by using the weighing spoon (large) 11, one heaped spoonful of objects are extracted from the container 13 (see Fig. 1) by using the weighing spoon (small) 111, and the extracted objects are put on the tray 12 which is empty. When the weight of the objects in the electronic weigher 100a at this time is, for example, 115g, the processor 17 of the electronic weigher 100a obtains the weight (115g) of the objects.

Then, twelve heaped spoonfuls of objects are extracted from the container 13 by using the weighing spoon (large) 11, one heaped spoonful of objects are extracted from the container 13 by using the weighing spoon (small) 111, and the extracted objects are put on the tray 212 which is empty. When the weight of the objects in the electronic weigher 200a at this time is, for example, 125g, the processor of the electronic weigher 200a obtains the weight (125g) of the objects.

Thereupon, in the electronic weigher 100a, on the first display area 50a, a command stating "Wa: one heaped spoonful of objects should be scooped by the spoon (small) (+ 5g)" is displayed. This command means that it is necessary to increase the objects put on the tray 12 witch an amount of 5g to adjust a present (current) weight of the objects which is the fixed-weight product so that the weight reaches a value which is equal to or greater than the lower limit value Wa ( = 120g) (preferably close to the lower limit value Wa) in the proper weight range and it.is necessary to add at least one heaped spoonful of objects by the weighing spoon (small) 11 to the objects put on the tray 12. Concurrently with this, the processor 17 of the electronic weigher 100a transmits to the processor of the electronic weigher 200a information (e.g., information of the above command) required to adjust the weight of the objects in the electronic weigher 100a so that the weight falls into the proper weight range.

In response to this, the command stating "Wa: one heaped spoonful of objects should be scooped by the spoon (small) (- 5g)" is displayed on an information display area 250 of the electronic weigher 200a. This command means that it is necessary to reduce the objects put on the tray 212 with an amount of 5g to adjust a present (current) weight of the objects which is the fixed-weight product so that the weight reaches a value close to the lower limit value Wa (= 120g) (equal to or greater than the lower limit value Wa) in the proper weight range and it is necessary to extract one heaped spoonful of objects by the weighing spoon (small) 11 from the tray 212.

In accordance with this command, the operator starts adjustment of the weight of the objects. The operator extracts one heaped spoonful of objects from the tray 212 of the electronic weigher 200a by using the weighing spoon (small) 111. If the weight of the extracted objects is about 5g, information indicating that the extracted amount is correct is displayed on the information display area 250 of the electronic weigher 200a. If the weight of the extracted objects is deficient or excess by a predetermined amount or greater with respect to 5g, information indicating that the extracted amount is deficient or excess is displayed on the information display area 250 of the electronic weigher 200a.

As described above, in the electronic weigher system 500A of the present embodiment, in a case where the objects put on the tray 12 of the electronic weigher 100a are deficient and the objects are added to the objects put on the tray 12, the processor of the electronic weigher 200a can determine whether or not the amount of the extracted objects is appropriate based on the information transmitted from the processor 17 of the electronic weigher 100a, at a time point when the objects are extracted from the tray 212 of the electronic weigher 200a. Therefore, by adjusting the amount of the extracted objects when the objects are extracted from the tray 212 of the electronic weigher 200a, the extracted objects have only to be transferred once to the tray 12 of the electronic weigher 100a to make the weight of the objects in the electronic weigher 100a fall into the proper weight range. As a result, the weight adjustment work of the objects in the electronic weigher 100a can be made efficient.

### (Embodiment 4)

Although in Embodiment 1 and Embodiment 2, the single electronic weighers 100a and 100b adjust the weight of the objects, an electronic weigher system including two or more electronic weighers may be used like Embodiment 3.

Fig. 8 is a view schematically showing an external appearance of an exemplary configuration of an electronic weigher system according to Embodiment 4 of the present invention.

As shown in Fig. 8, an electronic weigher system 500B includes the electronic weigher 100a (see Fig. 1), and an electronic weigher 300a, and is configured in such a manner that the processor 17 (see Fig. 2) of the electronic weigher 100a and a processor (not shown) of the electronic weigher 300a are able to communicate with each other via radio or via a wire.

A configuration of the electronic weigher 300a is identical to that of the electronic weigher 100a of Embodiment 1. Therefore, the configuration of the electronic weigher 300a will not be described in repetition.

In the electronic weigher system 500B of the present embodiment, a use mode will be described, in which the objects of the fixed-weight product are put on the tray 12 of the electronic weigher 100a, the objects of the fixed-weight product are put into weighing cups 312a, 312b, and 312c of the electronic weigher 300a, and weight adjustment of the objects is performed. However, the present invention is not limited to this. For example, another use mode may be used, in which in the electronic weigher 100a, the objects of the fixed-weight product are put on the tray 12, and weight adjustment of the objects is performed, while in the electronic weigher 300a, only measurement of the weight of the objects is performed to add the objects to the objects on the tray 12.

Next, an exemplary operation of the electronic weigher system 500B of the present embodiment will be described.

A volume of each of the weighing cups 312a, 312b and 312c is set based on a specific weight of the objects so that a weight of a level state of objects becomes close to the lower limit value Wa (= 120g) in the proper weight range of the objects.

Initially, the objects are put into the weighing cup 312a in a level state. Then, the weighing cup 312a is put on one end of a weighing platform 310 of the electronic weigher 300a. When the weight of the objects in the electronic weigher 300a at this time is, for example, 118g, the processor of the electronic weigher 300a obtains the weight (118g) of the objects of the weighing cup 312a.

Then, the objects are put into the weighing cup 312b in a level state. Then, the weighing cup 312b is put on a center of the weighing platform 310 of the electronic weigher 300a. When the weight of the objects in the electronic weigher 300a at this time is, for example, 240g, the processor of the electronic weigher 300a obtains as a weight of the objects in the weighing cup 312b, a difference (240g - 118g = 122g) between the weight at a present time and the weight obtained by putting the weighing cup 312a on the weighing platform 310.

Then, the objects are put into the weighing cup 312c in a level state. Then, the weighing cup 312c is put on the other end of the weighing platform 310 of the electronic weigher 300a. When the weight of the objects in the electronic weigher 300a at this time is, for example, 363g the processor of the electronic weigher 300a obtains as a weight of the objects in the weighing cup 312c, a difference (363g - 240g = 123g) between the weight at a present time and the weight obtained by putting the weighing cup 312b on the weighing platform 310.

Thereafter, according to Modified example 3, twelve heaped spoonfuls of objects are extracted from the container 13 (see Fig. 1) using the weighing spoon (large) 11, and the extracted objects are put into the tray 12 which is empty. In a case where the weight of the objects in the electronic weigher 100a at this time is, for example, 118g, the processor of the electronic weigher 100a obtains the weight (118g) of the objects.

Thereupon, a command stating "Wa: one level spoonful of objects should be scooped by the spoon (small) (+ 2.5g)" is displayed on the information display area 50 of the electronic weigher 100a. This command means that it is necessary to increase the objects put on the tray 12 with an amount of 2.5g to adjust a present (current) weight of the objects which is the fixed-weight product so that the weight reaches a value which is equal to or greater than the lower limit value Wa (= 120g) (preferably a value close to the lower limit value Wa) in the proper weight range and it is necessary to add one level spoonful of objects to the objects put on the tray 12 by the weighing spoon (small) 111. Concurrently with this, the processor 17 of the electronic weigher 100a transmits to the processor of the electronic weigher 300a information (e.g., information of the above command) required to adjust the weight of the objects in the electronic weigher 100a so that the weight falls into the proper weight range.

Receiving the information, the processor of the electronic weigher 300a selects an optimal weighing cup from among the weighing cups 312a, 312b and 312c, based on the information. More specifically, the processor of the electronic weigher 300a selects a weighing cup from among the weighing cups 312a, 312b and 31-2c in such a manner that the weight of the objects in the weighing cups 312a, 312b or 312c becomes closest to the lower limit value Wa in the proper weight range and does not become below the lower limit value Wa in the proper weight range is selected, after the objects of 2.5g are transferred from the weighing cups 312a, 312b or 312c to the tray 12 of the electronic weigher 100a. In this case, the processor of the electronic weigher 300a selects the weighing cup 312c.

Thereupon, a command stating "Wa: one level spoonful of objects should be scooped from the weighing cup 312c by the spoon (small) (- 2.5g)" is displayed on an information display area 350 of the electronic weigher 300a. This command means that it is necessary to reduce the objects put on the tray 12 with an amount of 2.5g from the weighing cup 312c to adjust a present (current) weight of the objects which is the fixed-weight product so that the weight reaches a value which is close to the lower limit value Wa (= 120g) (close to the lower limit value Wa) in the proper weight range and it is necessary to extract one level spoonful of objects from the weighing cup 312c by using the weighing spoon (small) 111.

In accordance with this command, the operator starts adjustment of the weight of the objects. The operator extracts one level spoonful of objects from the weighing cup 312c of the electronic weigher 300a by using the weighing spoon (small) 111. If the weight of the extracted objects is about 2.5g, information indicating that the extracted amount is appropriate is displayed on the information display area 350 of the electronic weigher 300a. If the weight of the extracted objects is deficient or excess by a predetermined amount or more with respect to 2.5g, information indicating that the extracted amount is deficient or excess is displayed on the information display area 350 of the electronic weigher 300a.

As described above, in the electronic weigher system 500B of the present embodiment, in a case where the objects put on the tray 12 of the electronic weigher 100a is deficient and the objects are added to the objects put on the tray 12, an optimal weighing cup can be selected from among the plurality of weighing cups 312a, 312b and 312c. This enable the electronic weigher 300a to easily adjust the weight of the objects.

The processor of the electronic weigher 300a can determine whether or not the amount of the extracted objects is appropriate based on the information transmitted from the processor 17 of the electronic weigher 100a, at a time point when the objects are extracted from the weighing cup of the electronic weigher 300a. Therefore, by adjusting the amount of the extracted objects when the objects are extracted from the weighing cup of the electronic weigher 300a, the extracted objects have only to be transferred once to the tray 12 of the electronic weigher 100a to make the weight of the objects in the electronic weigher 100fall into the proper weight range. As a result, weight adjustment work of the objects in the electronic weigher 100a can be made efficient.

### (Modified example of Embodiment 3 and Embodiment 4)

In the electronic weigher system 500A of Embodiment 3, in the case where the objects put on the tray 12 in the electronic weigher 100a are deficient and the objects are added to the objects put on the tray 12, the processor of the electronic weigher 200a can determine whether or not the amount of the extracted objects is appropriate based on the information transmitted from the processor 17 of the electronic weigher 100a at a time point when the objects are extracted from the tray 212 of the electronic weigher 200a. In the electronic weigher system 500B of Embodiment 4, at a time point when the objects are extracted from the weighing cup in the electronic weigher 300a, the processor of the electronic weigher 300a can determine whether or not the amount of the extracted objects is appropriate based on the information transmitted from the processor 17 of the electronic weigher 100a.

In some cases, even though the amount of the objects corresponding to one work unit in the routine work unit is added to the objects put on the tray 12 of the electronic weigher 100a, the amount of the objects is deficient. As a result, the weight of the objects in the electronic weigher 100a cannot be adjusted to fall into the proper weight range. Accordingly, it is sometimes necessary to carry out one work unit in the routine work plural times to adjust the weight to cause it to fall into the proper weight range of the objects in the electronic weigher 100a. In this case, it may be determined whether or not the amount of the extracted objects is appropriate based on whether or not this amount is advantageous to next routine work.

For example, if the weight of the objects having been addled by extracting the objects falls into a range of 80 ~ 100% of the lower limit value in the proper weight range, it is determine that the weight of the objects can be adjusted to fall into the proper weight range by one work unit in the next routine work. In this case, at a time point when the objects have been extracted from the tray 212 of the electronic weigher 200a or at a time point when the objects have been extracted from the weighing cup of the electronic weigher 300a, the processor 17 determines whether or not the weight of the objects which is predicted to be put on the tray 12 of the electronic weigher 100a falls into the range of 80 ~ 100% of the lower limit value in the proper weight range, based on the above information transmitted from the processor 17 of the electronic weigher 100a and the amount of the extracted objects. If it is determined that the weight of the objects falls into this range, the processor 17 may notify the operator of this information by using a suitable notification means (e.g., lamp).

It is supposed that in the case of the weight of the objects added by extracting the objects, the weight of the objects can be adjusted to fall into the proper weight range by further performing one work unit in the routine work plural times. In this case, at a time point when the objects have been extracted from the tray 212 of the electronic weigher 200a or at a time point when the objects have been extracted from the weighing cup of the electronic weigher 300a, the processor 17 provides a command representing a routine work required to adjust the weight of the objects in the electronic weigher 100a so that the weight falls into the proper weight range, based on the above information transmitted from the processor 17 of the electronic weigher 100a and the amount of the extracted objects. In addition, the processor 17 may output the command representing the routine work using the display device 201a of the electronic weigher 200a or the display device 301a of the electronic weigher 300a.

### Industrial Applicability

The present invention provides an electronic weigher which is capable of weighing and managing a fixed-weight product more efficiently than a conventional electronic weigher. Therefore, the present invention can be used as an electronic weigher which is capable of producing a fixed-weight product efficiently.

### Reference Sings Lists

- 10: weighing platform
- 11: weighing spoon (large)
- 12, 212: tray
- 13: container
- 14: detector
- 15: A/D converter
- 16: manipulation device
- 17: processor
- 20: body
- 30: weight display area
- 40: meter of indicator-needle type
- 40a: small weight range
- 40b: proper weight range
- 40c: excess weight range
- 40d: indicator needle
- 50, 250, 350: information display area
- 50a: first display area
- 50b: second display area
- 60: meter
- 60a: small weight range
- 60b: proper weight range
- 60c: excess weight range
- 60d: bar graph
- 100a, 100b, 200a, 300a: electronic weigher
- 101a, 101b, 201a, 301a: display device
- 111: weighing spoon (small)
- 500A, 500B: electronic weigher system
- Wa: lower limit value in proper weight range
- Wb: upper limit value in proper weight range
- α1,α2, α3, α4: objects

## Claims

1. An electronic weigher which adjusts a weight of objects by a routine work of weighing of the objects, the routine work being the weighing work of the objects in which the objects with a fixed amount are grabbed with the operator's hand or are scooped by using a weighing tool (11),
the electronic weigher comprising:
a detector (14) adapted to detect the weight of the objects and **characterized by**
a processor (17) adapted to determine an average unit weight of the objects in the routine work corresponding to an amount of the objects of one work unit in the routine work and adapted to provide a command representing the routine work required to adjust the weight of the objects so that the weight falls into a proper weight range of the objects by using the average unit weight, when the weight of the objects falls outside the proper weight range; and
an indicator (40) adapted to output the command representing the routine work.

2. The electronic weigher according to Claim 1,
wherein the processor (17) is adapted to provide the command representing the routine work required to adjust the weight of the objects so that the weight reaches a value close to a lower limit value in the proper weight range of the objects by using the average unit weight, when the weight of the objects falls within the proper weight range.

3. The electronic weigher according to Claim 1 or 2,
wherein the command representing the routine work is the number of times of one work unit in the routine work.

4. The electronic weigher according to Claim 3,
wherein the number of times of one work unit in the routine work is the number of times the objects are extracted by a weighing tool (11) capable of scooping the objects when the weighing tool (11) is used in the routine work, or the number of times an operator grabs the objects with the operator's hand.

5. The electronic weigher according to Claim 3,
wherein the processor (17) is adapted to obtain a weight difference between the objects before the weight of the objects is adjusted in accordance with the command representing the routine work and after the weight of the objects is adjusted in accordance with the command representing the routine work, by using the detector (14); and
wherein the processor (17) is adapted to determine whether or not the average unit weight of the objects in the routine work is appropriate using a value derived by dividing the weight difference by the number of times of the one work unit in the routine work.

6. An electronic weigher system comprising:
the electronic weigher according to any one of Claims 1 to 5 which is incorporated into each of a first weigher from which the objects are extracted by using the routine work and a second weigher supplied with the objects extracted from the first weigher; wherein
information required to adjust the weight of the objects in the second weigher so that the weight falls into the proper weight range is notified by the second weigher to the first weigher, and the processor (17) of the first weigher determines whether or not the amount of the extracted objects is appropriate based on the information when the objects are extracted in the first weigher.

7. The electronic weigher system according to Claim 6,
wherein when the objects are extracted in the first weigher, the processor (17) of the first weigher is adapted to provide the command representing the routine work required to adjust the weight of the objects in the second weigher so that the weight falls into the proper weight range, based on the amount of the extracted objects, and outputs the command representing the routine work using the indicator of the first weigher.

8. A weighing work method of objects which adjusts a weight of the objects by a routine work, the routine work being the weighing work of the objects in which the objects with a fixed amount are grabbed with the operator's hand or are scooped by using a weighing tool (11),
the method **characterized by**
determining an average unit weight of the objects in the routine work corresponding to an amount of the objects in one work unit in the routine work;
putting the objects on a weighing platform of an electronic weigher; and
providing a command representing the routine work required to adjust the weight of the objects so that the weight falls into a proper weight range of the objects using the average unit weight, when the weight of the objects which is detected by using the electronic weigher is outside the proper weight range of the objects.

## Patentansprüche

1. Elektronische Waage, die ein Gewicht von Gegenständen durch eine Routinetätigkeit des Wiegens der Gegenstände anpasst, wobei es sich bei der Routinetätigkeit um die Wiegetätigkeit für die Gegenstände handelt, wobei die Gegenstände mit einer festen Menge mit der Hand der Bedienperson gegriffen werden oder unter Verwendung eins Wiegewerkzeugs (11) geschöpft werden,
wobei die elektronische Waage Folgendes umfasst:
einen Detektor (14), der dazu angepasst ist, das Gewicht der Gegenstände zu erfassen, und **gekennzeichnet ist, durch**:
einen Prozessor (17), der dazu angepasst ist, ein durchschnittliches Einheitsgewicht der Gegenstände in der Routinetätigkeit zu bestimmen, das einer Menge der Gegenstände einer Tätigkeitseinheit in der Routinetätigkeit entspricht und dazu angepasst ist, einen Befehl bereitzustellen, der die Routinetätigkeit repräsentiert, die zum Anpassen des Gewichts der Gegenstände erforderlich ist, sodass das Gewicht der Gegenstände in einem Sollgewichtsbereich der Gegenstände liegt, indem er das durchschnittliche Einheitsgewicht verwendet, wenn das Gewicht der Gegenstände außerhalb des Sollgewichtsbereichs liegt; und
eine Anzeige (40), die dazu angepasst ist, den die Routinetätigkeit repräsentierenden Befehl auszugeben.

2. Elektronische Waage nach Anspruch 1,
wobei der Prozessor (17) dazu angepasst ist, unter Verwendung des durchschnittlichen Einheitsgewichts den Befehl bereitzustellen, der die zum Anpassen des Gewichts der Gegenstände erforderliche Routinetätigkeit repräsentiert, sodass das Gewicht einen Wert nah bei einem unteren Grenzwert im Sollgewichtsbereich der Gegenstände erreicht, wenn das Gewicht der Gegenstände im Sollgewichtsbereich liegt.

3. Elektronische Waage nach Anspruch 1 oder 2,
wobei es sich bei dem die Routinetätigkeit repräsentierenden Befehl um die Anzahl von Malen einer Tätigkeitseinheit in der Routinetätigkeit handelt.

4. Elektronische Waage nach Anspruch 3,
wobei es sich bei der Anzahl von Malen einer Tätigkeitseinheit in der Routinetätigkeit um die Anzahl von Malen handelt, die die Gegenstände von einem Wiegewerkzeug (11) entnommen werden, das in der Lage ist, die Gegenstände zu schöpfen, wenn das Wiegewerkzeug (11) in der Routinetätigkeit verwendet wird, oder um die Anzahl von Malen, die eine Bedienperson die Gegenstände mit der Hand der Bedienperson greift.

5. Elektronische Waage nach Anspruch 3,
wobei der Prozessor (17) dazu angepasst ist, unter Verwendung des Detektors (14) eine Gewichtsdifferenz zwischen den Gegenständen, bevor das Gewicht der Gegenstände gemäß dem die Routinetätigkeit repräsentierenden Befehl angepasst wird und nachdem das Gewicht der Gegenstände gemäß dem die Routinetätigkeit repräsentierenden Befehl angepasst wird, zu erhalten; und
wobei der Prozessor (17) dazu angepasst ist, unter Verwendung eines Werts, der durch Teilen der Gewichtsdifferenz durch die Anzahl Male der einen Tätigkeitseinheit in der Routinetätigkeit hergeleitet wird, zu bestimmen, ob oder nicht das durchschnittliche Einheitsgewicht der Gegenstände in der Routinetätigkeit angemessen ist.

6. Elektronisches Waagensystem, das Folgendes umfasst:
die elektronische Waage nach einem der Ansprüche 1 bis 5, die in jeder von einer ersten Waage, von der die Gegenstände unter Verwendung der Routinetätigkeit entnommen werden, und einer zweiten Waage, die mit den von der ersten Waage entnommenen Gegenständen versorgt wird, enthalten ist, wobei
Informationen, die erforderlich sind, um das Gewicht der Gegenstände in der zweiten Waage anzupassen, sodass das Gewicht in dem Sollgewichtsbereich liegt, von der zweiten Waage an die erste Waage gemeldet wird, und der Prozessor (17) der ersten Waage basierend auf den Informationen bestimmt, ob oder nicht die Menge der entnommenen Gegenstände angemessen ist, wenn die Gegenstände in der ersten Waage entnommen werden.

7. Elektronisches Waagensystem nach Anspruch 6,
wobei, wenn die Gegenstände in der ersten Waage entnommen werden, der Prozessor (17) der ersten Waage dazu angepasst ist, basierend auf der Menge der entnommenen Gegenstände, den Befehl bereitzustellen, der die zum Anpassen des Gewichts der Gegenstände in der zweiten Waage erforderliche Routinetätigkeit repräsentiert, sodass das Gewicht in dem Sollgewichtsbereich liegt, und den die Routinetätigkeit repräsentierenden Befehl unter Verwendung der Anzeige der ersten Waage ausgibt.

8. Wiegetätigkeitsverfahren für Gegenstände, das ein Gewicht der Gegenstände durch eine Routinetätigkeit anpasst, wobei es sich bei der Routinetätigkeit um die Wiegetätigkeit für die Gegenstände handelt, bei der die Gegenstände mit einer festen Menge mit der Hand der Bedienperson gegriffen werden oder unter Verwendung eines Wiegewerkzeugs (11) geschöpft werden,
wobei das Verfahren **gekennzeichnet ist durch**:
Bestimmen eines durchschnittlichen Einheitsgewichts der Gegenstände in der Routinetätigkeit, das einer Menge der Gegenstände in einer Tätigkeitseinheit in der Routinetätigkeit entspricht;
Platzieren der Gegenstände auf eine Wiegeplattform einer elektronischen Waage; und
Bereitstellen, unter Verwendung des durchschnittlichen Einheitsgewichts, eines Befehls, der die Routinetätigkeit repräsentiert, die erforderlich ist, um das Gewicht der Gegenstände anzupassen, sodass das Gewicht in einem Sollgewichtsbereich der Gegenstände liegt, wenn das Gewicht der Gegenstände, das unter Verwendung der elektronischen Waage erfasst wird, außerhalb des Sollgewichtsbereichs der Gegenstände liegt.

## Revendications

1. Balance électronique servant à des fins d'ajustement de poids d'objets par une opération de routine consistant à peser les objets, l'opération de routine étant l'opération de pesage des objets comme quoi les objets à quantité fixe sont saisis par la main de l'opérateur ou sont ramassés au moyen d'un outil de pesage (11),
la balance électronique comportant :
un détecteur (14) adapté pour détecter le poids des objets,
et **caractérisée par**
un processeur (17) adapté pour déterminer un poids unitaire moyen des objets au cours de l'opération de routine correspondant à une quantité des objets d'une unité opérationnelle au cours de l'opération de routine et adapté pour fournir une commande représentant l'opération de routine requise à des fins d'ajustement du poids des objets de telle sorte que le poids se trouve dans les limites d'une plage de poids appropriée des objets en utilisant le poids unitaire moyen, quand le poids des objets se trouve en dehors de la plage de poids appropriée ; et
un indicateur (40) adapté pour émettre la commande représentant l'opération de routine.

2. Balance électronique selon la revendication 1,
dans laquelle le processeur (17) est adapté pour fournir la commande représentant l'opération de routine requise à des fins d'ajustement du poids des objets de telle sorte que le poids atteint une valeur proche d'une valeur limite inférieure dans les limites de la plage de poids appropriée des objets en utilisant le poids unitaire moyen, quand le poids des objets se trouve dans les limites de la plage de poids appropriée.

3. Balance électronique selon la revendication 1 ou la revendication 2,
dans laquelle la commande représentant l'opération de routine est le nombre de fois qu'est effectuée une unité opérationnelle au cours de l'opération de routine.

4. Balance électronique selon la revendication 3,
dans laquelle le nombre de fois qu'est effectuée une unité opérationnelle au cours de l'opération de routine est le nombre de fois que les objets sont extraits par un outil de pesage (11) en mesure de ramasser les objets quand l'outil de pesage (11) est utilisé au cours de l'opération de routine, ou le nombre de fois qu'un opérateur saisit les objets par la main de l'opérateur.

5. Balance électronique selon la revendication 3,
dans laquelle le processeur (17) est adapté pour obtenir une différence de poids entre les objets avant l'ajustement du poids des objets en fonction de la commande représentant l'opération de routine et après l'ajustement du poids des objets en fonction de la commande représentant l'opération de routine, en utilisant le détecteur (14) ; et
dans laquelle le processeur (17) est adapté pour déterminer si oui ou non le poids unitaire moyen des objets au cours de l'opération de routine est approprié en utilisant une valeur dérivée en divisant la différence de poids par le nombre de fois qu'est effectuée ladite une unité opérationnelle au cours de l'opération de routine.

6. Système de balance électronique comportant :
la balance électronique selon l'une quelconque des revendications 1 à 5 qui est incorporée dans chacune d'une première balance en provenance de laquelle les objets sont extraits en utilisant l'opération de routine et d'une deuxième balance qui reçoit les objets extraits en provenance de la première balance ; dans lequel
des informations requises à des fins d'ajustement du poids des objets dans la deuxième balance de telle sorte que le poids se trouve dans les limites de la plage de poids appropriée sont notifiées par la deuxième balance à la première balance, et le processeur (17) de la première balance détermine si oui ou non la quantité des objets extraits est appropriée en fonction des informations quand les objets sont extraits dans la première balance.

7. Système de balance électronique selon la revendication 6,
dans lequel, quand les objets sont extraits dans la première balance, le processeur (17) de la première balance est adapté pour fournir la commande représentant l'opération de routine requise à des fins d'ajustement du poids des objets dans la deuxième balance de telle sorte que le poids se trouve dans les limites de la plage de poids appropriée, en fonction de la quantité des objets extraits, et émet la commande représentant l'opération de routine en utilisant l'indicateur de la première balance.

8. Procédé de l'opération de pesage d'objets servant à des fins d'ajustement d'un poids des objets par une opération de routine, l'opération de routine étant l'opération de pesage des objets comme quoi les objets à quantité fixe sont saisis par la main de l'opérateur ou sont ramassés au moyen d'un outil de pesage (11),
le procédé étant **caractérisé par**
l'étape consistant à déterminer un poids unitaire moyen des objets au cours de l'opération de routine correspondant à une quantité des objets au cours d'une unité opérationnelle au cours de l'opération de routine ;
l'étape consistant à placer les objets sur une plateforme de pesage d'une balance électronique ; et
l'étape consistant à fournir une commande représentant l'opération de routine requise à des fins d'ajustement du poids des objets de telle sorte que le poids se trouve dans les limites d'une plage de poids appropriée des objets en utilisant le poids unitaire moyen, quand le poids des objets qui est détecté en utilisant la balance électronique se trouve en dehors de la plage de poids appropriée des objets.
